# EUROPÄISCHE PATENTANMELDUNG

(11) **EP 1 498 723 A1**
(43) Veröffentlichungstag der Anmeldung: **19.01.2005**
(21) Anmeldenummer: 04090280.1
(22) Anmeldetag: 16.07.2004
(51) Int. Cl.: G01N 21/89, G01N 21/892, A24C 5/34

(54) **Verfahren zum Erkennen von Fremdkörpern innerhalb eines kontinuierlich geführten Produktstroms und Vorrichtung zur Durchführung desselben**

(30) Priorität: 17.07.2003 EP 03090222
(71) Anmelder: Hauni Maschinbau AG, 21033 Hamburg (DE)
(72) Erfinder: Schröder, Dierk, 22399 Hamburg (DE); Drewes, Harry, 22303 Hamburg (DE); Schuster, Frank, 21035 Hamburg (DE); Hapke, Siegfried, 21502 Geesthacht (DE); Ibel, Michael, 25469 Halstenbek (DE)
(74) Vertreter: Patentanwälte Wenzel & Kalkoff

(57) **Zusammenfassung**

Die Erfindung betrifft ein Verfahren zum Erkennen von Fremdkörpern innerhalb eines kontinuierlich geführten Produktstroms (13), insbesondere in einem Tabakstrom, sowie eine Vorrichtung (10) zur Durchführung des Verfahrens.

Durch das erfindungsgemäße Verfahren sowie die Vorrichtung (10) wird auf besonders einfache und zuverlässige Weise eine zeitgleiche Bestrahlung des Produktstroms (13) über die gesamte Breite erreicht, da das Bestrahlungslicht (14) mit einem Strahl-Aufweiter (18) fächerförmig aufgeweitet wird. Damit kann auf bewegte Teile verzichtet werden. Des weiteren kann der Produktstrom (13) kontinuierlich und mit hoher Auflösung detektiert werden.

Das Bestrahlungsmittel (11) umfaßt mindestens eine Lichtquelle (21,22,23,24), die vorzugsweise als Laser ausgebildet ist und bei unterschiedlichen Wellenlängen abstrahlt. Als Detektionsmittel (15) wird mindestens eine Kamera (30,31,32,33) verwendet, die vorzugsweise als Zeilenkamera ausgebildet ist.

## Beschreibung

Die Erfindung befaßt sich mit einem Verfahren zum Erkennen von Fremdkörpern innerhalb eines kontinuierlich geführten Produktstroms, umfassend die Schritte: Bestrahlen des Produktstroms mit kollimiertem Bestrahlungslicht, Detektieren mindestens eines Teils des von dem Produktstrom durch Wechselwirkung mit dem kollimierten Bestrahlungslicht ausgehenden Detektionslichts, wobei das Bestrahlen und Detektieren mindestens teilweise in demselben optischen Strahlengang erfolgt. Des weiteren betrifft die Erfindung eine Vorrichtung zum Erkennen von Fremdkörpern innerhalb eines kontinuierlich geführten Produktstroms, im wesentlichen bestehend aus einem Bestrahlungsmittel zum Bestrahlen des Produktstroms, einem Detektionsmittel zum Detektieren mindestens eines Teils des von dem Produktstrom durch Wechselwirkung mit dem Bestrahlungslicht ausgehenden Detektionslichts, wobei das Bestrahlungsmittel und das Detektionsmittel derart angeordnet sind, daß der optische Strahlengang der Bestrahlung und der Detektion mindestens teilweise deckungsgleich sind, sowie einem Strahlteiler zum Trennen des Bestrahlungslichts vom Detektionslicht.

Derartige Verfahren und Vorrichtungen werden verschiedentlich eingesetzt, um Fremdkörper innerhalb eines Produktstromes zu erkennen und anschließend auch gleich auszusortieren. In der tabakverarbeitenden Industrie werden die genannten Verfahren und Vorrichtungen dafür eingesetzt, innerhalb eines kontinuierlich und zweckmäßigerweise flächig geförderten Tabakstroms nicht verarbeitbare und/oder nicht erwünschte Bestandteile, wie z.B. Folienreste, Papierreste oder dergleichen, zu erkennen und aus dem Produktstrom auszusondern.

Zur Erkennung der Fremdkörper in einem Produktstrom, insbesondere in einem Tabakstrom gibt es unterschiedliche Ansätze. Bei einem bekannten Verfahren werden die Fremdkörper mit einer Kamera detektiert. Die zur Erkennung erforderliche Beleuchtung, nämlich das Bestrahlen des Produktstroms erfolgt durch zeilenförmigen Lampen, die zu beiden Seiten der Kamera installiert sind. Bei diesem Verfahren bzw. dieser Vorrichtungsanordnung verlaufen die optischen Strahlengänge der Kamera einerseits und der Lampen andererseits in einem Winkel zueinander, so daß eine Schattenwirkung auftritt. Bei zu messenden Fremdkörpern, die sich gegenseitig überlappen können, da der Tabakstrom in mehreren Ebenen transportiert werden kann, kann ein Schatten eines oberen Fremdkörpers auf einen unteren Fremdkörper geworfen werden, was zu einer falschen Beurteilung bei der Auswertung der mit der Kamera aufgenommenen Bilder führt. Damit ist die Nachweisempfindlichkeit dieses Verfahrens bzw. dieser Vorrichtung bei der Erkennung von Fremdkörpern in einem Tabakstrom gering.

Um das Problem der Schattenwirkung zu vermeiden, wird in einem weiteren bekannten Verfahren ein Laserstrahl durch ein statisches optisches Element geleitet und anschließend quer zur Transportrichtung des Produktstroms über diesen bewegt. Diese Bewegung kann z.B. durch ein weiteres optisches Element, vorzugsweise einen rotierenden Spiegel, erfolgen, das den Laserstrahl abgelenkt. Der Laserstrahl wird dadurch in Abhängigkeit der Zeit quer zur Transportrichtung des Produktstroms, also des Meßguts, über das Meßgut gefahren. Mit anderen Worten wird der Produktstroms zeitlich versetzt, also nacheinander über die gesamte Breite vom Laserstrahl abgescannt. Das vom Produktstrom zurückkommende Licht wird mindestens teilweise in derselben optischen Achse, dem optischen Strahlengang, in umgekehrter Richtung zurückgeführt und an dem genannten statischen optischen Element seitlich ausgeblendet, um dann in einem Detektionsmittel aufgefangen zu werden. Nachteilig ist an diesem Verfahren und an dieser Konstruktion, daß das rotierende optische Element nur eine begrenzte Rotationsgeschwindigkeit erlaubt. Da der Produktstrom mit hoher Transportgeschwindigkeit transportiert wird, ist eine Abtastung des Produktstroms nur in Abständen, üblicherweise etwa alle 4mm in Transportrichtung des Produktstroms möglich. Dadurch ist die Auflösung der Bildauswertung und damit die Erkennung von Fremdkörpern stark eingeschränkt. Ein weiterer Nachteil besteht darin, daß die Rotations- bzw.

Umfangsgeschwindigkeit des rotierenden Spiegels ausreicht, um zum Verschleiß der optischen Flächen des Spiegels aufgrund von Staubpartikeln in der Luft zu führen. Dadurch ist die Lebensdauer des rotierenden Spiegels begrenzt. Ohnehin unterliegen bewegte Teile dem Verschleiß und stellen damit eine potentielle Fehlerquelle dar.

Es ist daher Aufgabe der vorliegenden Erfindung, eine Verfahren vorzuschlagen, das geeignet ist, auf einfache und störungsfreie Weise das zuverlässige Erkennen von Fremdkörpern in einem Produktstrom mit hoher Nachweisempfindlichkeit zu ermöglichen. Des weiteren ist es Aufgabe der Erfindung, eine einfache Vorrichtung vorzuschlagen, mittels der das Erkennen von Fremdkörpern in einem Produktstrom zuverlässig gewährleistet wird.

Diese Aufgabe wird durch ein Verfahren mit den eingangs genannten Schritten dadurch gelöst, daß der Produktstrom über seine gesamte Breite zeitgleich bestrahlt wird, wobei das kollimierte Bestrahlungslicht hierzu zu einem fächerförmigen Lichtstrahl zur linienförmigen Beleuchtung des Produktstroms aufgeweitet wird. Dadurch ist auf überraschend einfache Weise sichergestellt, daß der Produktstrom in seiner gesamten Breite in einem Schritt erfaßt und mit einer hohen Nachweisempfindlichkeit auf Fremdkörper untersucht wird. Durch die linienförmige Bestrahlung ist eine parallele und zeitgleiche Aufnahme des Produktstroms über seine gesamte Breite möglich, wodurch auf konstruktiv aufwendige und die Auflösung des Produktstroms begrenzende Mittel verzichtet werden kann. Im Ergebnis ist eine sehr hohe Nachweisempfindlichkeit für Fremdkörper innerhalb des Produktstroms gewährleistet, selbst wenn sich Fremdkörper in unterschiedlichen Ebenen überlappen. Konkret ist eine verbesserte Auflösung höher 4mm gewährleistet.

Vorzugsweise wird das Bestrahlungslicht aus mehreren Lichtstrahlen unterschiedlicher Wellenlängen gebildet. Dadurch wird erreicht, daß in Abhängigkeit der Anzahl der unterschiedlichen Wellenlängen des Bestrahlungslichtes die Unterschiede im Detektionslicht leichter und eindeutiger ausgewertet werden können, wodurch das Ergebnis der Auswertung verbessert wird. Fremdkörper, die bei der Verwendung einer einzigen Wellenlänge nicht erkannt würden, sind durch den erfindungsgemäßen Schritt nunmehr erkennbar.

In einer bevorzugten Weiterbildung des Verfahrens wird kollimiertes Bestrahlungslicht aus sichtbarem oder nahe infrarotem Licht eingesetzt. Durch diese Auswahl ist auf besonders einfache und exakte Weise die Detektion des Reflexionslichtes bei verschiedenen Wellenlängen möglich, da die Bestrahlung mit hoher Intensität erfolgt, wobei die Erkennung der Fremdkörper durch den Kontrast bei den verschiedenen Arbeitswellenlängen erfolgt. Mit anderen Worten werden die unterschiedlichen Reflexionseigenschaften der Fremdkörper einerseits und des Produktstroms andererseits, nämlich z.B. des Tabaks besonders hervorgehoben.

In einer anderen bevorzugten Ausführungsform des Verfahrens wird kollimiertes Bestrahlungslicht aus infrarotem Licht eingesetzt. Mit diesem Lichtspektrum ist u.a. die Messung von Wasserlinien und anderen im infraroten Lichtspektrum auftretenden Wechselwirkungen, wie z.B. Reflexion, mit dem Bestrahlungslicht möglich. Gerade Tabak und andere pflanzliche Stoffe weisen in der Regel einen Wassergehalt auf, der den wichtigsten und üblichsten Fremdstoffen fehlt. Somit ist es auf einfache Weise möglich, die Fremdkörper zuverlässig vom verwertbaren und verarbeitbaren Produktstrom zu unterscheiden. Gleiches gilt auch für den Nachweis definierter organischer Verbindungen innerhalb des Produktstroms, die eine charakteristische Wechselwirkung mit infrarotem Licht aufweisen und somit leicht detektierbar sind.

Vorteilhafterweise wird kollimiertes Bestrahlungslicht aus ultraviolettem Licht eingesetzt. Dadurch ist eine besonders hohe Strahlungsintensität am Produktstrom und somit auch am Detektionsmittel gewährleistet, wodurch die relative Empfindlichkeit bei der Detektion verbessert wird. Mit anderen Worten lassen sich auf diese Weise selbst minimale Unterschiede in der Zusammensetzung des Produktstroms detektieren. So lassen sich unterschiedliche Fluoreszenzerscheinungen des fermentierten Tabaks und der Fremdkörper gezielt zur Sortierung nutzen.

In einer weiteren bevorzugten Ausgestaltung der Erfindung erfolgt das Bestrahlen des Produktstroms mit Lichtstrahlen unterschiedlicher Wellenlänge und das Detektieren des reflektierten und/oder fluoreszierten Detektionslichts zu unterschiedlichen Zeitpunkten. Mit diesem auch unter dem Begriff "Zeitmultiplex" bekannten Verfahren ist die Detektion von reflektiertem und/oder fluoresziertem Licht mit einem einzelnen Detektionsmittel, vorzugsweise einer einzelnen Kamera, für die unterschiedlichen Bestrahlungsbedingungen möglich. Bei der Zeitmultiplexmessung werden die Lichtquellen nach einem vorgegebenen Zeitmuster jeweils nacheinander eingeschaltet, so daß jeweils zu einem Zeitpunkt nur mit einer Wellenlänge beleuchtet wird. Daher kann zu diesem Zeitpunkt die Reflexion auch nur durch gerade diese Wellenlänge erfolgen. Es genügt also ein Zeilenarray, das für alle verwendeten Wellenlängen empfindlich ist. Die Reflexionsdaten lassen sich daher mit einer einzigen schnellen Kamera ermitteln. Weiterhin ermöglicht die getaktete Anregung und Detektion den Verzicht auf optische Mittel zur Wellenlängenselektion, wie z.B. Filter oder Gitter, wodurch das Verfahren vereinfacht und gleichzeitig die Empfindlichkeit der Messung verbessert wird. Mit anderen Worten wird durch das Zeitmultiplex-Verfahren eine zusätzliche Meßoption, nämlich die Messung integraler Signale über einen Wellenlängenbereich- bei gleichzeitiger Zuordnung zum jeweiligen Bestrahlungslicht - ermöglicht.

Weiterhin wird die Aufgabe durch eine Vorrichtung der eingangs genannten Art dadurch gelöst, daß im optischen Strahlengang des Bestrahlungsmittels vor dem Strahlteiler ein Mittel zum linienförmigen Aufweiten eines Lichtstrahls angeordnet ist. Dadurch ist eine konstruktiv besonders einfache aber sehr genau arbeitende Vorrichtung geschaffen. Mit dieser Vorrichtung ist auf überraschend einfache Weise sichergestellt, daß der Produktstrom in seiner gesamten Breite in einem Schritt erfaßbar und mit einer hohen Nachweisempfindlichkeit auf Fremdkörper überprüfbar ist. Durch das außerhalb des Detektionslichtes angeordnete Mittel ist die linienförmige Bestrahlung und damit eine parallele und zeitgleiche Aufnahme des Produktstroms über seine gesamte Breite möglich, wodurch auf konstruktiv aufwendige und die Auflösung des Produktstroms begrenzende Mittel verzichtet werden kann. Im Ergebnis ist eine sehr hohe Nachweisempfindlichkeit für Fremdkörper innerhalb des Produktstroms gewährleistet, selbst wenn sich Fremdkörper in unterschiedlichen Ebenen überlappen.

In einer bevorzugten Weiterbildung der Erfindung umfaßt die Vorrichtung mindestens einen Laser als Lichtquelle, der derart ausgebildet, daß er mit mehreren Wellenlängen gleichzeitig arbeitet. Dadurch ist der konstruktive Aufbau weiter wesentlich vereinfacht und ermöglicht eine sehr kleine und kompakte Baugröße.

Vorteilhafterweise ist das Bestrahlungslicht im sichtbaren und/oder nahen infraroten und/oder infraroten und/oder ultravioletten Spektralbereich. Dadurch lassen sich eine Vielzahl von Auswertemöglichkeiten realisieren, die je nach zu prüfendem Produkt und der erforderlichen Nachweisempfindlichkeit auswählbar sind.

Weitere bevorzugte Weiterbildungen des Verfahrens und Merkmale und Ausführungsformen der Vorrichtung gehen aus den Unteransprüchen und der Beschreibung hervor. Eine besonders bevorzugte Ausführungsform der Vorrichtung, anhand der auch das Verfahren beschrieben wird, wird mit Hilfe der Zeichnung näher erläutert. In der Zeichnung zeigt:
- Fig. 1: eine Seitenansicht einer bevorzugten Ausführungsform der erfindungsgemäßen Vorrichtung,
- Fig. 2: eine Draufsicht auf die Vorrichtung gemäß Figur 1, und
- Fig. 3: ein Schaubild zur Darstellung des Prinzips der Beschreibung von Intensitäten mindestens dreier unterschiedlicher Wellenlängen durch korrespondierende Punkte im mindestens 3-dimensionalen Raum.

Die gezeigte Vorrichtung dient zum Erkennen von Fremdkörpern innerhalb eines kontinuierlich geförderten Produktstroms, der vorzugsweise aus Tabak besteht.

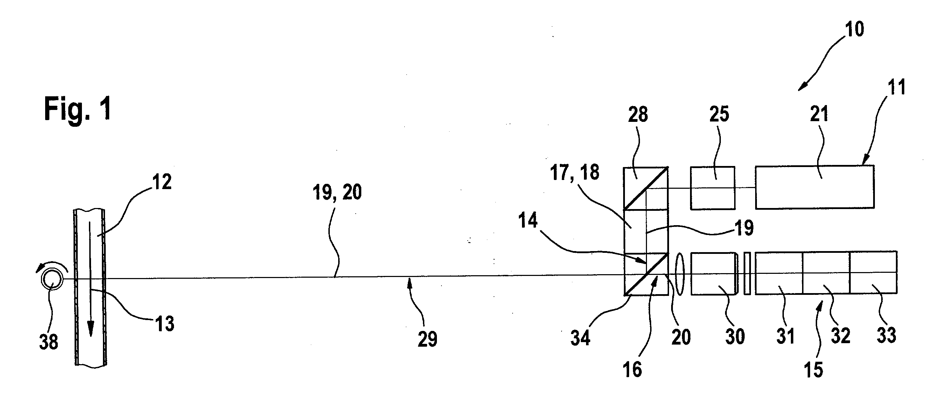

Die in Figur 1 dargestellte Vorrichtung 10 umfaßt ein Bestrahlungsmittel 11 zum Bestrahlen eines innerhalb eines Strömungskanals 12 oder dergleichen geförderten und vorzugsweise aus Tabak bestehenden und in einer freien Flugstrecke transportierten Produktstrom 13 mit Bestrahlungslicht 14, ein Detektionsmittel 15 zum Detektieren mindestens eines Teils des von dem Produktstrom 13 durch Wechselwirkung mit dem Bestrahlungslicht 14 ausgehenden Detektionslichts 16 sowie ein Mittel 17 zum linienförmigen Aufweiten eines oder mehrerer Lichtstrahlen. Das Mittel 17 ist als Strahl-Aufweiter 18 ausgebildet und im optischen Strahlengang 19 des Bestrahlungsmittels 11 angeordnet. Das Bestrahlungsmittel 11 und das Detektionsmittel 15 sind derart zueinander angeordnet, daß der optische Strahlengang 19 des Bestrahlungsmittels 11 und der optische Strahlengang 20 des Detektionsmittels 15 mindestens teilweise deckungsgleich, d.h. mindestens teilweise dieselbe optische Achse bilden.

Das Bestrahlungsmittel 11 umfaßt mindestens eine Lichtquelle, wobei in der Ausführungsform vier Lichtquellen 21, 22, 23, 24 vorgesehen sind. Jede Lichtquelle 21 bis 24 ist vorzugsweise als Laser ausgebildet (andere Lichtquellen sind jedoch ebenfalls verwendbar), wobei mindestens eine der Lichtquellen 21 bis 24 bzw. der Laser, aber auch mehrere oder sämtliche Lichtquellen 21 bis 24 bzw. Laser Licht unterschiedlicher Wellenlänge abstrahlen. Es ist grundsätzlich auch ein einzelner Laser einsetzbar, der mit mehreren Wellenlängen gleichzeitig leuchtet. In jedem optischen Strahlengang jeder Lichtquelle 21 bis 24 ist ein optisches Element angeordnet, das zweckmäßigerweise als Strahlteiler 25, 26, 27 ausgebildet ist, wobei die Lichtquellen 23 und 24 einen gemeinsamen Strahlteiler 27 aufweisen. Durch die Strahlteiler 25 bis 27 sind die kollimierten Lichtstrahlen der Lichtquellen 21 bis 24 gebündelt, derart, daß sie über einen Spiegel 28 und einen hinter dem Spiegel 28 angeordneten zentralen Strahlteiler 34 in einem einzigen zusammengefaßten Lichtstrahl 29 auf den Produktstrom 13 gelenkt werden. Der zentrale Strahlteiler 34 trennt quasi das Bestrahlungslicht 14 vom Detektionslicht 16. Anders ausgedrückt teilt der Strahlteiler 34 den optischen Strahlengang in einen Hin- und einen Rückweg ein. Der Strahl-Aufweiter 18 ist vor dem zentralen Strahlteiler 34 angeordnet, so daß der Lichtstrahl vor dem deckungsgleichen Abschnitt der Strahlengänge 19, 20 aufgeweitet ist.

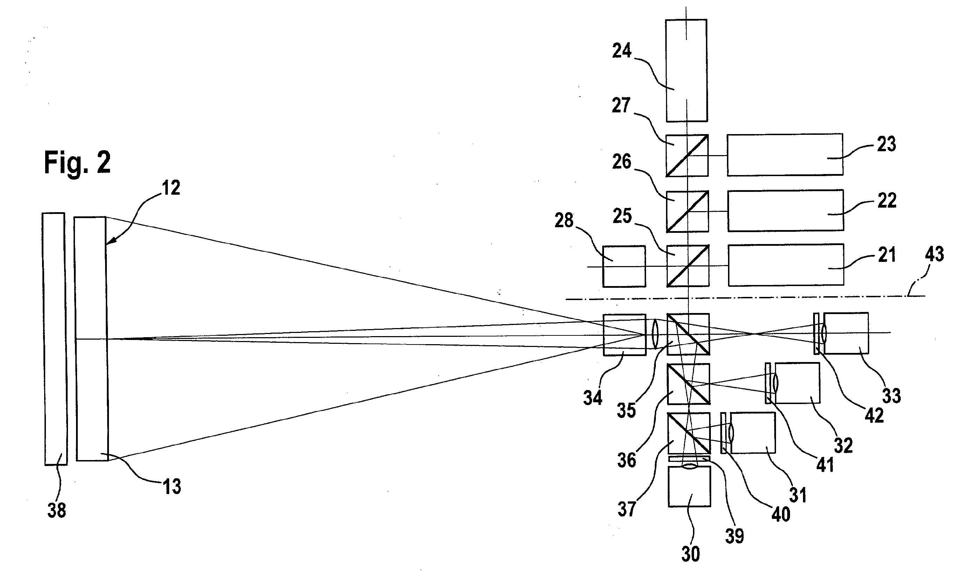

Das Detektionsmittel 15 umfaßt mindestens eine Kamera, wobei in der in den Figuren 1 und 2 dargestellten Ausführungsform vier Kameras 30, 31, 32, 33 angeordnet sind. Alternativ kann jedoch auch eine einzelne Kamera mit mehreren Zeilen verwendet werden, wobei die Anzahl der Zeilen zweckmäßigerweise der Anzahl der Lichtquellen 21 bis 24 entspricht. Jeder Lichtquelle 21 bis 24 bzw. jedem Laserstrahl ist eine Kamera 30 bis 33 zugeordnet. Vorzugsweise sind die Kameras 30 bis 33 als Zeilenkameras ausgebildet. Jede der Kameras 30 bis 33 weist für sämtliche beschriebene Ausführungsformen mit Ausnahme des später beschriebenen Zeitmultiplex-Verfahrens eine eigene Empfindlichkeit für unterschiedliche Spektralbereiche auf. Für den Fall, daß eine einzelne Kamera mit mehreren Zeilen verwendet wird, ist jede Zeile für einen unterschiedlichen Spektralbereich empfindlich.

In jedem optischen Strahlengang 20 jeder Kamera 30 bis 33 ist ein optisches Element angeordnet, das zweckmäßigerweise als Strahlteiler 35, 36, 37 ausgebildet ist. Die Kameras 30 und 31 verfügen in der gezeigten Ausführungsform über den gemeinsamen Strahlteiler 37. Die Kameras 30 bis 33 sind derart justierbar, daß die auf dem Produktstrom 13 beleuchtete Zeile gerade auf der Zeile jeder einzelnen Kamera 30 bis 33 abbildbar ist.

Zur besseren Darstellung ist die Vorrichtung 10 in Figur 2 etwas versetzt dargestellt. Genauer sind die Elemente 21 bis 28 parallel zur gedachten Achse 43 versetzt gezeichnet. In der tatsächlichen Vorrichtung 10 befindet sich der Spiegel 28 oberhalb des zentralen Strahlteilers 34 und der Strahlteiler 25 ist oberhalb des Strahlteilers 35 angeordnet.

Optional kann in jedem optischen Strahlengang der Kameras 30 bis 33 ein optischer Filter 39, 40, 41, 42 und/oder ein Polarisationsfilter angeordnet sein. Wahlweise kann das Bestrahlungslicht 14 im sichtbaren und/oder nahen infraroten und/oder infraroten und/oder ultravioletten Spektralbereich sein. Dies hängt im wesentlichen von der gewählten Auswertung des Detektionslichtes 16 zusammen und wird im folgenden noch näher erläutert. Um die jeweilige Lichtstärke des Bestrahlungslichts 14 kalibrieren zu können, ist ein Reflexionselement mit einer Hintergrundfrequenz vorgesehen.
Zweckmäßigerweise entsprechen die Reflexionseigenschaften des Reflexionselementes denen des Produktstroms 13. Damit wird gleichzeitig bewirkt, daß bei der Detektion des Produktstromes 13 lediglich zwei Reflexionskörper vorhanden sind, nämlich einerseits der Tabak als Teil des Produktstroms 13 sowie andererseits die im Produktstrom 13 enthaltenen Fremdkörper. Sollte also eine Fehlstelle innerhalb des Produktstroms 13 auftreten, würde dies nicht wegen vom Tabak abweichender Reflexionseigenschaften als Fremdkörper erkannt, sondern da die Reflexionseigenschaften des Reflexionselementes denen des Produktstroms 13 entsprechen, den Eindruck erwecken, als ob Tabak vorhanden wäre.

Diese Hintergrundfrequenz ist in der bevorzugten Ausführungsform als Hintergrundwalze 38 ausgebildet. Die Hintergrundwalze 38 ist rotierend antreibbar und auf der dem Produktstrom 13 abgewandten Seite des Strömungskanals 12, der vorzugsweise als mechanisches Bauteil, z.B. als rechteckiger Schacht oder als ein durch den Produktstrom 13 selbst definierter Strom, z.B. eine Flugbahn beschreibender Strom, dessen äußere Begrenzung durch den Produktstrom 13 selbst gebildet wird, ausgebildet ist, angeordnet, so daß gleichzeitig ein Reinigungseffekt, z.B. durch zyklisches Abstreifen von Anlagerungen, erzielbar ist. Anstelle der Hintergrundwalze 38 kann auch ein Band oder dergleichen vorgesehen sein. Alternativ kann das Reflexionselement auch eine aktive Lichtquelle sein.

In einer nicht dargestellten Ausführungsform kann die Vorrichtung 10 auch zu beiden Seiten des Produktstroms 13 angeordnet sein, wobei die einander gegenüberliegenden Vorrichtungen 10 in der Höhe dann versetzt zueinander, also übereinander stehen müssen. Durch eine derartige Anordnung kann ein beidseitiges Abscannen des Produktstroms 13 erfolgen, wodurch eine höhere Schichtdicke des Produktstroms 13 detektiert werden kann, was wiederum den Durchsatz an Tabak erhöht.

### Die verschiedenen Varianten der Verfahren laufen wie folgt ab:

Für alle im folgenden beschriebenen Verfahren gilt, daß ein oder mehrere stark kollimierte Lichtstrahlen, z.B. Laserstrahlen, aus den Lichtquellen 21 bis 24 über die Strahlteiler 25 bis 27 über den Spiegel 28 und den Strahlteiler 34 in dem zusammengefaßten Lichtstrahl 29 auf den Produktstrom 13 gelenkt werden. Der Lichtstrahl 29 wird jedoch im optischen Strahlengang 19 mittels des Strahl-Aufweiters 18 zu dem fächerförmigen Lichtstrahl 29 aufgeweitet, so daß der Lichtstrahl 29 auf dem Produktstrom 13 eine Linie über die gesamte Breite des Produktstroms 13 beschreibt. Mit anderen Worten wird der Lichtstrahl 29 in einer Achse aufgeweitet.

Für das anhand der Figuren 1 und 2 beschriebene Verfahren gilt, daß die Kameras 30 bis 33 so über die Strahlteiler 35 bis 37 justiert werden, daß die beleuchtete Zeile auf dem Produktstrom 13 gerade auf der Zeile jeder einzelnen Kamera 30 bis 33 abgebildet wird. Alternativ ist jede Kamera 30 bis 33 jeweils für mehrere Spektralbereiche empfindlich - z.B. rotes, grünes und blaues Licht - oder in jedem Strahlengang des detektierten Lichtes ist ein optischer Filter 39, 40, 41, 42 angeordnet, der die gewünschten Wellenlängen filtert und lediglich ausgewählte optische Wellenlängenbereiche auf die jeweilige Kamera 30 bis 33 durchläßt. Da die Lichtquellen 21 bis 24 in dieser Ausführungsform in einem Spektralbereich des sichtbaren oder nahen infraroten Lichtes arbeiten, wird die Reflexion bei verschiedenen Wellenlängen mit Hilfe der Kameras 30 bis 33 gemessen. Die Erkennung der Fremdkörper erfolgt schließlich durch einen meßbaren Kontrast bei den verschiedenen Arbeitswellenlängen.

In einer anderen Ausführungsform arbeiten eine oder mehrere Lichtquellen 21 bis 24 im infraroten Spektralbereich, nämlich im Bereich der Wasserlinien. Da pflanzliches Meßgut, also auch Tabak grundsätzlich einen Wassergehalt aufweist, die meisten gravierenden Fremdkörper jedoch nicht, lassen sich die Fremdkörper vom eigentlichen und zu verarbeitenden Maßgut leicht unterscheiden. Hierzu wird der Produktstrom 13 wird wie bereits zum anderen Ausführungsbeispiel erwähnt, mit dem Infrarotlicht bestrahlt. Das reflektierte Detektionslicht 16 wird mittels einer oder mehrerer Kameras 30 bis 33 aufgenommen und auf der Grundlage des Effektes der Wasserlinien ausgewertet.

In einer weiteren Ausführung wird das durch Fluoreszenz erzeugte Licht als Detektionslicht 16 bei der Erkennung der Fremdkörper eingesetzt. Insbesondere fermentierter Tabak fluoresziert bei Anregung mit ultraviolettem Licht deutlich. Die Fluoreszenz von Tabak im sichtbaren Spektralbereich ist immer noch charakteristisch. Unterschiedliche Fremdkörper dagegen fluoreszieren nur schwach oder mit einer charakteristischen Farbe, so daß durch die Auswertung der Fluoreszenz auf die Fremdkörper geschlossen werden kann. Der Produktstrom 13 wird daher wie auch in den zuvor beschriebenen Verfahren mit Bestrahlungslicht 14 aus einer oder mehreren Lichtquellen 21 bis 24 bestrahlt, wobei das Bestrahlungslicht 14 im ultravioletten Spektralbereich liegt. Eine oder mehrere Kameras 30 bis 33 nehmen das Fluoreszenzlicht auf, wobei das Fluoreszenzlicht mit Hilfe der Filter 39 bis 42 geeignete Wellenlängen selektiert. Die Wellenlängen sind derart ausgewählt, daß sich Fremdkörper vom Meßgut unterscheiden.

In einem weiteren erfindungsgemäßen Verfahren erfolgt das Bestrahlen mit Licht unterschiedlicher Wellenlänge durch eine oder mehrere Lichtquellen 21 bis 24 zu unterschiedlichen Zeitpunkten. Mit anderen Worten werden die unterschiedlichen Anregungswellenlängen getaktet zu unterschiedlichen Zeitpunkten angesteuert. Die oder jede Kamera 30 bis 33 wird bei jeder dieser Anregungen ausgelesen, wobei die oder jede Kamera 30 bis 33 sowohl reflektiertes Licht als auch fluoreszierendes Licht aufnehmen kann.

Es besteht auch die Möglichkeit, das reflektierte Licht bzw. das Fluoreszenzlicht durch geeignete Polarisationsfilter, die im Strahlengang des Detektionslichtes angeordnet sind, zu leiten. Die Polarisationsfilter nehmen eine Unterscheidung hinsichtlich der Polarisationsrichtung vor. Bereits die Bestrahlung erfolgt dabei mit polarisiertem Licht. Das Bestrahlungslicht kann durch geeignete Filter polarisiert sein. Alternativ kann aber auch die Lichtquelle selbst polarisiertes Licht abgeben.

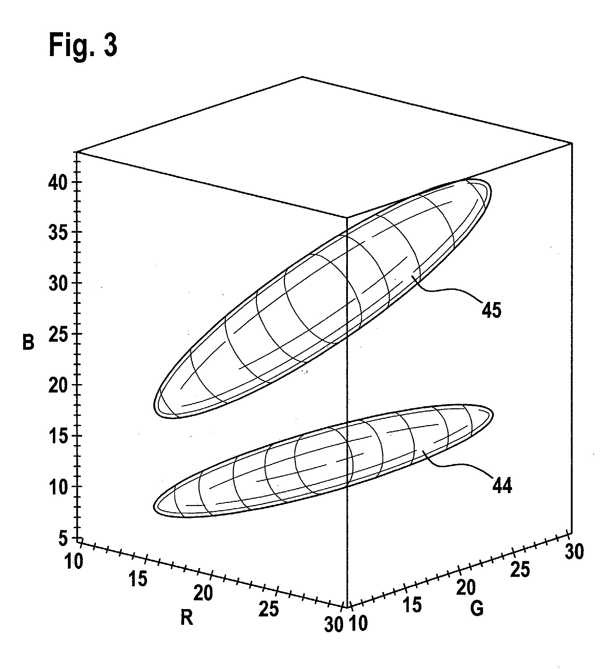

Bei der Auswertung des Detektionslichtes 16 kann neben den herkömmlichen Auswertungsverfahren auch eine n-dimensionale Auswertung erfolgen. Das bedeutet, daß Intensitäten n unterschiedlicher Wellenlängen durch korrespondierende Punkte im n-dimensionalen Raum beschrieben werden. Das Auswertungsverfahren wird anhand der Figur 3 am Beispiel von Intensitäten dreier unterschiedlicher Wellenlängen, z.B. mit RGB-Signalen (rot, grün, blau) erläutert. Ein Punkt im Raum kennzeichnet die Intensitäten der RGB-Signale. Jeder Produktstrom 13 weist typische Reflexionssignale auf. Bei Tabak liegen die typischen Reflexionssignal in dem mit 44 bezeichneten, zigarrenförmigen Bereich. Die Zigarrenform des Bereichs 44 entsteht durch die sich näherungsweise proportional zueinander ändernden Farbzusammensetzungen bei Intensitätsschwankungen. Sämtliche Punkte innerhalb des Bereichs 44 entsprechen dem zu untersuchenden Produktstrom 13, dem Tabak. Alle Punkte, die außerhalb des Bereichs 44 liegen, entstammen grundsätzlich einem Fremdkörper. Da auch die Fremdkörper einer Sorte, z.B. Folienreste, Intensitätsschwankungen aufweisen, ergibt sich für jede Sorte ebenfalls ein zigarrenförmiger Bereich 45. In der gezeigten Darstellung weist der Fremdkörper gegenüber dem Tabak einen deutlich höheren Anteil des Blausignals auf, so daß die Erkennung des Fremdkörpers besonders einfach ist.

## Patentansprüche

1. Verfahren zum Erkennen von Fremdkörpern innerhalb eines kontinuierlich geführten Produktstroms (13), umfassend die Schritte:
- Bestrahlen des Produktstroms (13) mit kollimiertem Bestrahlungslicht (14),
- Detektieren mindestens eines Teils des von dem Produktstrom (13) durch Wechselwirkung mit dem kollimierten Bestrahlungslicht (14) ausgehenden Detektionslichts (16),
- wobei das Bestrahlen und Detektieren mindestens teilweise in demselben optischen Strahlengang (19, 20) erfolgt,
**dadurch gekennzeichnet,daß**
- der Produktstrom (13) über seine gesamte Breite zeitgleich bestrahlt wird, wobei
- das kollimierte Bestrahlungslicht (14) hierzu zu einem fächerförmigen Lichtstrahl (29) zur linienförmigen Beleuchtung des Produktstroms (13) aufgeweitet wird.

2. Verfahren nach Anspruch 1, **dadurch gekennzeichnet, daß** das Bestrahlungslicht (14) aus mehreren Lichtstrahlen unterschiedlicher Wellenlänge gebildet wird.

3. Verfahren nach Anspruch 1 oder 2, **dadurch gekennzeichnet, daß** das Bestrahlungslicht (14) aus Laserstrahlen gebildet wird.

4. Verfahren nach Anspruch 3, **dadurch gekennzeichnet, daß** mehrere Laserstrahlen in einem zusammengefassten, aufgeweiteten Lichtstrahl (29) auf den Produktstrom (13) gelenkt werden.

5. Verfahren nach einem der Ansprüche 1 bis 4, **dadurch gekennzeichnet, daß** kollimiertes Bestrahlungslicht (14) aus sichtbarem oder nahe infrarotem Licht und/oder infrarotem Licht und/oder ultraviolettem Licht eingesetzt wird.

6. Verfahren nach einem der Ansprüche 1 bis 5, **dadurch gekennzeichnet, daß** reflektiertes und/oder fluoresziertes Detektionslicht (16) detektiert wird.

7. Verfahren nach Anspruch 6, **dadurch gekennzeichnet, daß** das reflektierte Detektionslicht (16) bei verschiedenen Wellenlängen mit Hilfe verschiedener Kameras (3 0, 31, 3 2, 33) aufgenommen wird.

8. Verfahren nach Anspruch 7, **dadurch gekennzeichnet, daß** das Erkennen der Fremdkörper durch den Kontrast bei den verschiedenen Wellenlängen erfolgt.

9. Verfahren nach einem der Ansprüche 1 bis 8, **dadurch gekennzeichnet, daß** das Bestrahlen des Produktstroms (13) mit Lichtstrahlen unterschiedlicher Wellenlänge und das Detektieren des reflektierten und/oder fluoreszierten Detektionslicht (16) zu unterschiedlichen Zeitpunkten erfolgt.

10. Verfahren nach einem der Ansprüche 1 bis 9, **dadurch gekennzeichnet, daß** das Detektionslicht (16) gefiltert wird.

11. Verfahren nach einem der Ansprüche 1 bis 10, **dadurch gekennzeichnet, daß** die Lichtstärke des Bestrahlungslichtes (14) kalibriert wird.

12. Verfahren nach einem der Ansprüche 1 bis 11, **dadurch gekennzeichnet, daß** Intensitäten mindestens dreier unterschiedlicher Wellenlängen durch korrespondierende Punkte im mindestens 3-dimensionalen Raum beschrieben werden.

13. Vorrichtung zum Erkennen von Fremdkörpern innerhalb eines kontinuierlich geführten Produktstroms (13), im wesentlichen bestehend aus einem Bestrahlungsmittel (11) zum Bestrahlen des Produktstroms (13), einem Detektionsmittel (15) zum Detektieren mindestens eines Teils des von dem Produktstrom (13) durch Wechselwirkung mit dem Bestrahlungslicht (14) ausgehenden Detektionslichts (16), wobei das Bestrahlungsmittel (11) und das Detektionsmittel (15) derart angeordnet sind, daß der optische Strahlengang (19, 20) der Bestrahlung und der Detektion mindestens teilweise deckungsgleich sind, sowie einem Strahlteiler (34) zum Trennen des Bestrahlungslichts (14) vom Detektionslicht (16), **dadurch gekennzeichnet, daß** im optischen Strahlengang (19) des Bestrahlungsmittels (11) vor dem Strahlteiler (34) ein Mittel (17) zum linienförmigen Aufweiten des Bestrahlungslichts (14) angeordnet ist.

14. Vorrichtung nach Anspruch 13, **dadurch gekennzeichnet, daß** das Bestrahlungsmittel (11) mindestens eine Lichtquelle (21, 22, 23, 24) umfaßt.

15. Vorrichtung nach Anspruch 13 oder 14, **dadurch gekennzeichnet, daß** jede Lichtquelle (21, 22, 23, 24) ein Laser ist.

16. Vorrichtung nach Anspruch 15, **dadurch gekennzeichnet, daß** mindestens ein Laser derart ausgebildet ist, daß er mit mehreren Wellenlängen gleichzeitig leuchtet.

17. Vorrichtung nach einem der Ansprüche 13 bis 16, **dadurch gekennzeichnet, daß** in jedem optischen Strahlengang jeder Lichtquelle ein Strahlteiler (25, 26, 27) angeordnet ist.

18. Vorrichtung nach einem der Ansprüche 13 bis 17, **dadurch gekennzeichnet, daß** das Detektionsmittel (15) mindestens eine Zeilenkamera (30, 31, 32, 33) umfaßt.

19. Vorrichtung nach einem der Ansprüche 13 bis 17, **dadurch gekennzeichnet, daß** das Detektionsmittel (15) mehrere Zeilenkameras (30, 31, 32, 33) umfaßt, wobei jeder Lichtquelle (21, 22, 23, 24) bzw. jedem Laser eine Zeilenkamera (30 bis 33) zugeordnet ist, oder eine Zeilenkamera mit einer Anzahl von Zeilen entsprechend der Anzahl der Laser vorgesehen ist.

20. Vorrichtung nach Anspruch 18 oder 19, **dadurch gekennzeichnet, daß** jede Zeilenkamera (30 bis 33) oder jede Zeile einer Zeilenkamera für unterschiedliche Spektralbereiche empfindlich ist.

21. Vorrichtung nach einem der Ansprüche 18 bis 20, **dadurch gekennzeichnet, daß** n Zeilenkameras (30 bis 33) (n-1) Strahlteiler (35 bis 37) zugeordnet sind.

22. Vorrichtung nach einem der Ansprüche 13 bis 21, **dadurch gekennzeichnet, daß** in jedem optischen Strahlengang jeder Zeilenkamera (30 bis 33) ein optischer Filter (39 bis 42) und/oder eine Polarisationsfilter angeordnet ist.

23. Vorrichtung nach einem der Ansprüche 13 bis 22, **dadurch gekennzeichnet, daß** das Bestrahlungslicht (14) im sichtbaren und/oder nahen infraroten und/oder infraroten und/oder ultravioletten Spektralbereich ist.

24. Vorrichtung nach einem der Ansprüche 13 bis 23, **dadurch gekennzeichnet, daß** auf der der bestrahlten Seite des Produktstroms (13) abgewandten Seite ein Reflexionselement angeordnet ist, dessen Reflektionseigenschaften im wesentlichen mit denen des Produktstroms übereinstimmen.
